# EUROPEAN PATENT SPECIFICATION

(11) **EP 2 364 588 B1**
(45) Date of publication and mention of the grant of the patent: **28.11.2012**
(21) Application number: 10425066.7
(22) Date of filing: 12.03.2010
(51) Int. Cl.: A01K 63/04

(54) **Double-speed filtering unit for aquarium tank**
Filtereinheit für Aquarien mit doppelter Geschwindigkeit
Unité de filtration pour aquarium a double vitesse

(43) Date of publication of application: 14.09.2011
(73) Proprietor: Askoll Holding S.r.l., 36031 Povolaro di Dueville (Vicenza) (IT)
(72) Inventor: Marioni, Elio, 36031 Dueville (Vicenza) (IT)
(74) Representative: Botti, Mario

(56) References cited:
- EP-A1- 0 484 896
- US-A- 4 915 828
- US-A- 5 084 164

## Description

### Field of application

The present invention relates, in its more general aspect, to a filter unit for aquariums.

The invention is usefully applied as filter unit for domestic aquarium, more particularly of the type designed to be hung according to a so-called "hang on back" configuration on one of the walls of the tank of said aquarium.

### Prior art

As known to persons skilled in the art, the proper outfitting of an aquarium normally includes the installation of a filter unit, which is required to perform an action of recirculation and purification of the water, essential for the physiological well-being of the fish fauna contained in the tank.

A device of this kind provides in general for a forced fluid path which traverses one or more filter bodies, positioned inside compartments which are arranged in series inside a container. The unit normally comprises pumping means, constituted for example by a synchronous electric pump, designed to aspirate water from the tank of the aquarium, convey it via the fluid path and return it, purified, into the same tank.

More particularly, at least one of the filter bodies is always arranged to perform filtering of a purely mechanical type, while others, assigned to filtering processes of a biological and/or chemical type, can be present in the more sophisticated filters.

The body arranged for mechanical filtering of the water, generally synthetic sponge or wool, intercepts the coarser impurities present in the liquid flow which traverses the filter unit.

The filter body intended for biological filtering is instead formed, in some of the filter units according to the prior art, by a bed of tubes, i.e. small cylinders in a ceramic material designed to be colonised by bacteria, which in turn perform the actual purification of the water, transforming the waste substances generated by the organisms present in the aquarium into innocuous compounds.

The filter body intended instead for chemical filtering (also known as adsorbent filtering) is normally activated carbon. Its function is that of absorbing some noxious elements, eliminating them from the filtered water.

The speed with which the liquid flow traverses the various filter stages described above is a decisive parameter for the efficacy of the filter unit.

In fact both biological filtering and adsorbent filtering processes produce better results when the flow of the water through the relative filters is sufficiently slow. In this case, in fact, the bacteria succeed in settling better and the time the water stays in contact with the active materials increases.

On the other hand, however, it is evident that an excessively slow flow entails a high time of recirculation of the water, with negative effects on the average degree of purification of the liquid contained in the tank.

From what has been said above a disadvantage arises, which has not been resolved to date, of the filter units according to the prior art comprising filter bodies with chemical and/or biological action. The speed of the flow will in fact always' be such whereby said filter units work in a non-optimal manner: either because the flow traverses these filter bodies too fast or, on the contrary, due to the excessively slow time of recirculation of the water.

Prior art document UPS 5,084,164 discloses a filter assembly having a pre-filter, followed by a filter member and a protein skimmer arranged in parallel.

Prior art document EP 0 484 896 discloses an aquarium filter having a mechanical filtration region and a biological filtration region with an alternative bypass duct.

Prior art document US 4,915,828 discloses an aquarium filter having a spiral pre-filter operating in parallel to biological and chemical stages,

The technical problem at the base of the present invention is, therefore, that of devising a filter unit able to reconcile the opposing needs expressed above, i.e. allowing an optimal action of the biological and/or chemical filters contained therein while maintaining a discretionally reduced time of recirculation of the water.

### Summary of the invention

The abovementioned technical problem is solved by the features described in claim 1.

The division of the fluid path into two or more subpaths allows on the one hand the guarantee of the time necessary for an effective filtering action of the chemical-biological type inside the second filter, and on the other hand the maintaining of a high speed of recirculation of the water which traverses only the first mechanical filter.

The second filter may advantageously comprise a second cartridge, traversed by the first slow subpath and arranged to contain filtering material, preferably a material with chemical and/or biological action. In order to be able to be traversed by the first slow subpath, the cartridge has to provide at least one access aperture and at least one exit aperture.

The second cartridge can be inserted extractably inside a second compartment of the container. In this case, the liquid flow which follows the fast subpath can circulate inside the volume of the second compartment not occupied by said second cartridge.

This solution has the advantage of extreme constructional simplicity. In fact the fast subpath is formed from members (cartridge and relative compartment) which are already present in most of the filters according to the prior art: the production of any further member is not therefore necessary.

More particularly, the fast subpath can follow a lower passage defined above by the second cartridge and below by a base wall which defines the second compartment below.

The access apertures of the second cartridge can be a plurality and can open on one side of the same cartridge, while the exit apertures can also be a plurality and can open on an opposite side of the cartridge.

The number and the arrangement of the apertures mentioned above have the advantage of guaranteeing an effective transit of the liquid flow through the cartridge. In fact the liquid flow, in order to follow the alternative fast subpath which extends below the cartridge, must lap the apertures positioned on the sides of the same. A portion of liquid flow then penetrates the cartridge to exit on the opposite side, bypassing the lower passage of the fast subpath.

In order to encourage complete purification of the liquid inside the second cartridge, the overall area of the access apertures can be chosen to be greater than the overall area of the exit apertures.

The filter unit can also comprise a third filter, also arranged to perform at least one filtering action other than the mechanical one.

The presence of the third filter advantageously allows the second and the third filter to be assigned one to chemical filtering and the other to biological filtering of the liquid.

The third filter can comprise a third cartridge, equipped with at least one access aperture and at least one exit aperture, arranged to contain filtering material, which can be inserted extractably inside the second compartment superimposed on the second cartridge.

This arrangement of the third filter has evident advantages from a constructional point of view. In fact the fast subpath defined according to the methods described previously will be alternative both to the second and to the third filter, allowing in both these stages (chemical and biological) for the filtering to take place in sufficiently long times.

The first filter can comprise a first cartridge inserted extractably inside a filtering chamber of the container and at least one filtering medium supported by said first cartridge.

This feature has the advantage of allowing easy maintenance of the filtering medium which constitutes the mechanical filter, facilitating its periodical replacement and/or cleaning.

The filtering medium can be formed by a filtering sponge or by two juxtaposed filtering sponges. In this second case the sponge positioned upstream can be arranged to intercept the coarser impurities, while the one farther downstream can be arranged to stop the finer residues.

The first cartridge can comprise below a cup intended to house the lower end of the filtering medium mentioned above.

The presence of the cup prevents the accumulation on the base of the filtering chamber of those impurities which, intercepted by the filtering medium, deposit on the base thereof.

The first cartridge can define above an overflow chamber configured to fill up in the case of clogging of the first filter, said overflow chamber having an outflow hole for letting the excess liquid flow out into a first compartment of the filtering chamber upstream of said filtering medium.

The filter unit can also comprise an overflow indicator comprising in turn a float housed in the overflow chamber and integral with an indicator rod slidingly housed inside a hole open towards the outside of the container.

The filter unit can comprises a further fluid path in addition to that which traverses the abovementioned filters. More particularly, a secondary path is defined for the liquid flow which traverses a fourth filter comprising a percolator.

Said path can traverse from above downwards a third sponge positioned above said percolator.

This sponge can comprise two fabrics having a different pattern which enclose one with the other a sponge body. The upstream fabric can have holes of a certain size while the downstream fabric has holes of smaller dimension. This structural peculiarity allows the sponge to filter particulate of different grain size mechanically: the upstream fabric retains the coarse detritus, the downstream fabric the fine type. As a result the sponge works by performing mechanical filtering along its whole thickness. This sponge also acts as biological material in that the body of the sponge retains in an optimal manner the beneficial bacteria.

Said sponge of innovative type can also be used in filter units different from the one according to the present invention; it can also be used in the first filter of the present filter unit.

The secondary path with percolator guarantees better oxygenation of the filtered liquid, improving the filtering efficacy of the filter unit.

The percolator can be more particularly formed by a percolator cover which closes the third cartridge above, which in this case can be filled with biological filtering material.

In this way, the liquid flow which follows the secondary path, once enriched with oxygen by means of the percolator, flows into the biological filter, guaranteeing even more effective biological filtering.

The filter unit can comprise an intake tube in fluid communication with the fluid inlet, it being possible to manipulate said intake tube so as to vary its alignment with an intake of a volute of the pumping means.

This technique allows the regulation in a simple manner of the flow rate of the filter unit, without having to regulate the speed of the same pumping means. The regulation of the flow rate can be used both to prime said pumping means on starting, and to adapt to particular needs of the fauna and of the flora contained in the aquarium tank.

The container of the filter unit can be arranged to be associated astride a wall of an aquarium tank. The fluid outlet will in this case take the shape of an overfall spillway arranged to face towards the interior of the same aquarium tank.

This solution has interesting advantages given that the container, even though it does not reduce the aquarium volume available to the fish fauna, on the other hand does not entail excessive bulk of the external spaces.

Moreover the return into the tank of the purified water by means of the overfall spillway allows proper oxygenation of the water which favours the biological needs of the aquarium system.

Further features and advantages of the filter unit according to the invention will be made clearer by the following description of a specific embodiment given by way of a non-limiting example with reference to the accompanying drawings.

### Brief description of the drawings

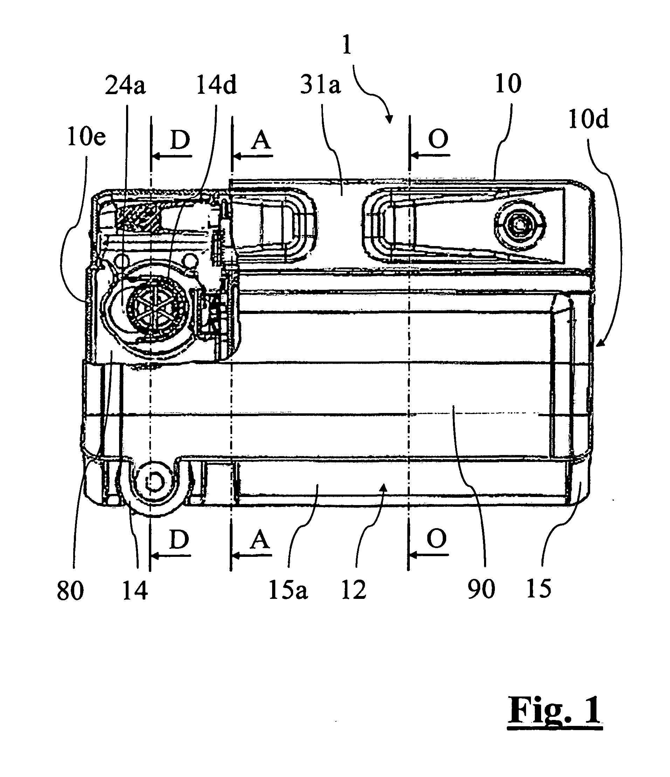

Figure 1 shows a view from above, partially sectioned, of a filter unit according to the present invention;

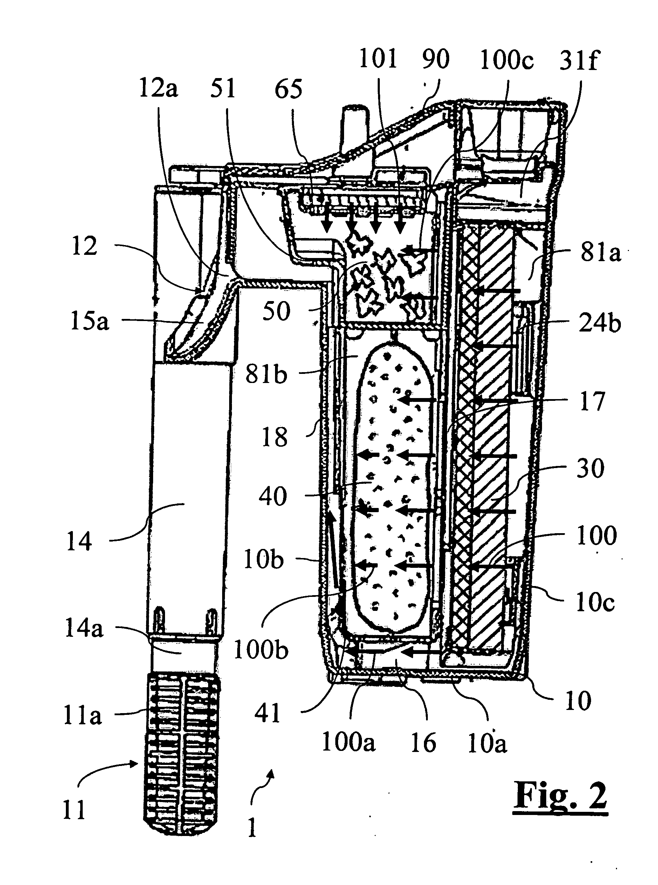

Figure 2 shows a side view of the filter unit of Figure 1, sectioned along a plane O-O identified in the drawing;
Figure 3 shows a side view of the filter unit of Figure 1, sectioned along a plane A-A identified in the drawing;

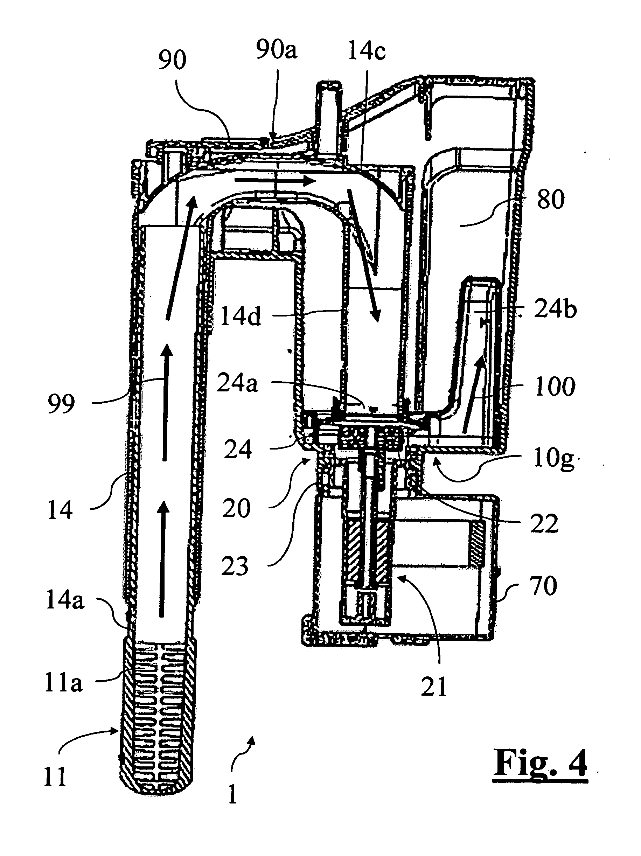

Figure 4 shows a side view of the filter unit of Figure 1, sectioned along a plane D-D identified in the drawing;
Figure 5 shows a perspective view with blown-up parts of a first cartridge of the filter unit of Figure 1;
Figure 6 shows a sectioned side view of the cartridge of Figure 5;
Figure 7 shows a sectioned front view of the cartridge of Figure 5;

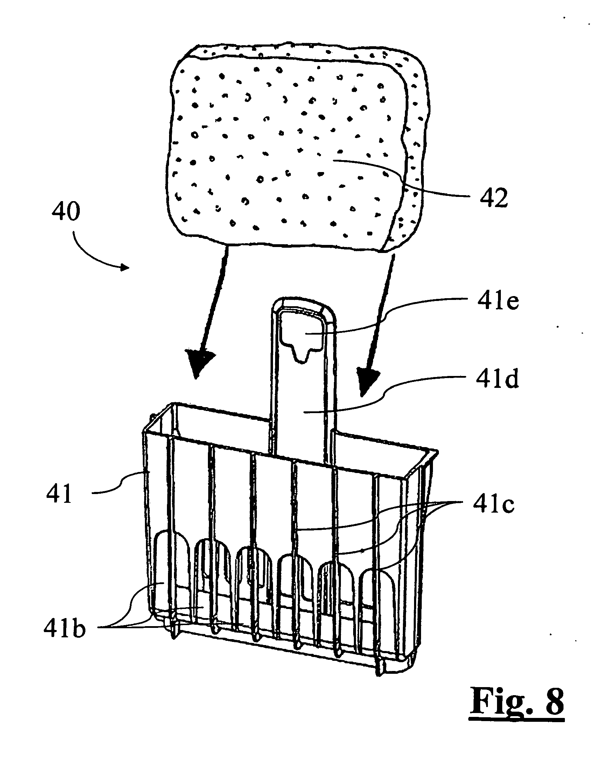

Figure 8 shows a perspective view with blown-up parts of a second filter of the filter unit of Figure 1;

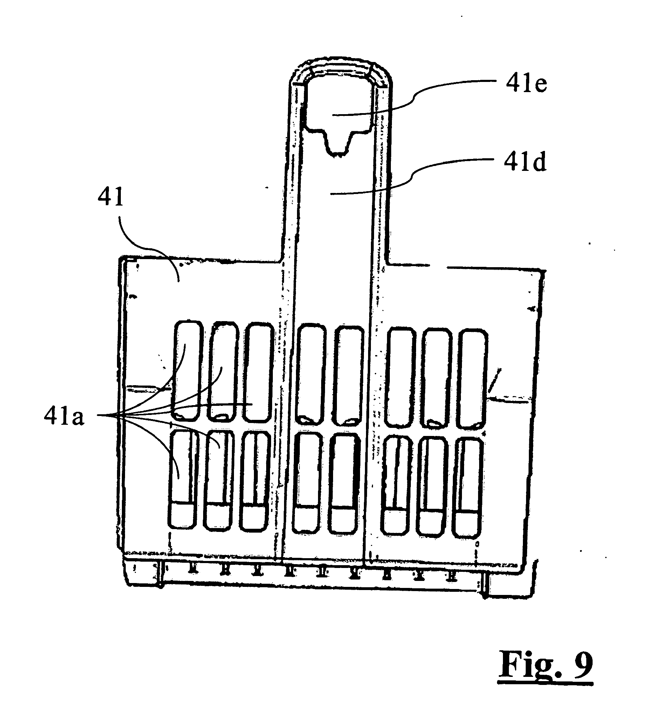

Figure 9 shows a rear view of the cartridge of the second filter of Figure 8;

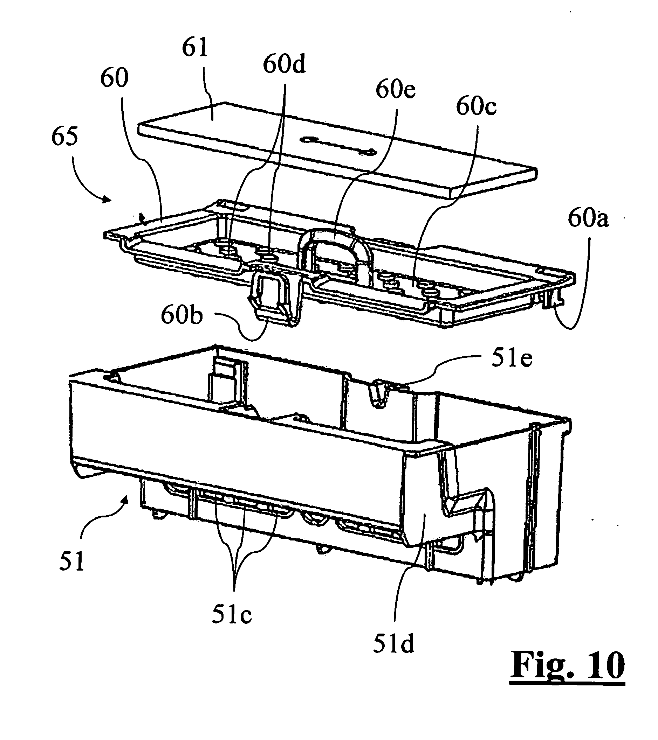

Figure 10 shows a perspective view with blown-up parts of a third cartridge of the filter unit of Figure 1;

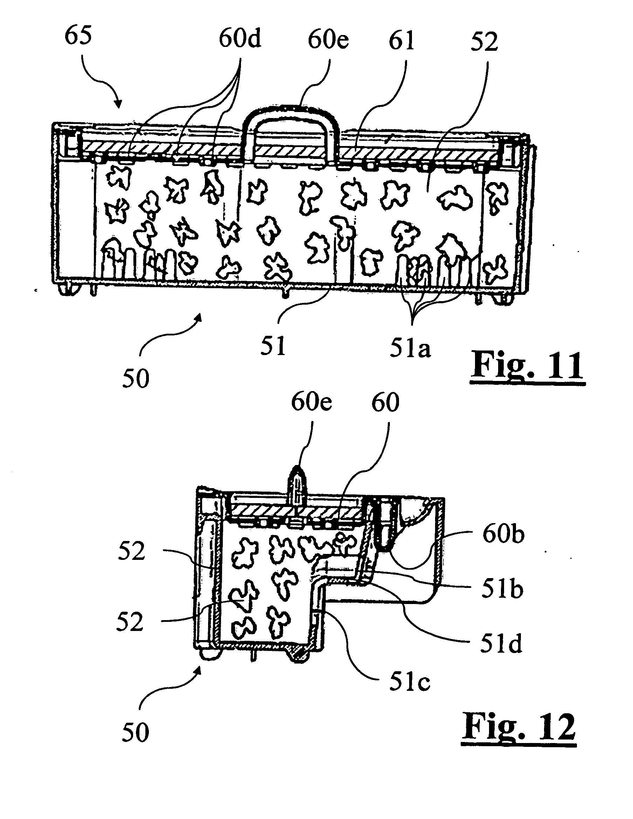

Figure 11 shows a sectioned front view of the cartridge of Figure 10;
Figure 12 shows a sectioned side view of the cartridge of Figure 10;
Figure 13 is a black and white photo of a face upstream of a sponge comprised in the filter unit of Figure 1;
Figure 14 is a black and white photo of the face downstream of the sponge of Figure 13;
Figure 15 is a black and white photo of the profile of the sponge of Figure 13.

### Detailed description

Referring to the accompanying drawings, 1 denotes generically a filter unit for aquariums.

More particularly, the preferred embodiment described with reference to said drawings relates to a filter unit for domestic aquariums of the so-called "hang on back" type, i.e. arranged to be hung astride over one of the lateral walls of an aquarium tank (not illustrated).

The filter unit 1 is shown in the drawings according to a normal working configuration; further on in the present description the positions and the orientations, relative and absolute, of the various elements which make up the unit, defined by means of terms such as upper and lower, above and below, horizontal and vertical or other equivalent terms, should always be interpreted with reference to this configuration.

The filter unit 1 comprises a container 10, inside whereof the operations are performed of filtering of a liquid flow drawn from the aquarium tank and returned there once filtering has taken place.

The container 10 has externally the shape of a parallelepiped whose lower portions exhibits a lateral recess to make room for pumping means 20 described herein below.

The external walls which define the container 10 are a base wall 10a wherefrom a front wall 10b, a rear wall 10c, a first continuous side wall 10d and a second side wall 10e rise up. The latter is made up of two separate vertical portions joined one to the other by a horizontal portion 10g, to form the previously mentioned recess. The lower vertical portion of the second side wall 10e continues inside the container 10 with a dividing septum 10f which divides the same container 10 into two adjacent chambers: a volute chamber 80 and a filtering chamber 81.

At the upper end of the front wall 10b, the container 10 is provided with an attachment appendage 15 which allows it to be hung astride the side wall of the aquarium tank. This attachment appendage 15 extends longitudinally along the entire upper edge of the front wall 10b.

Starting from the side of the attachment appendage 15 corresponding to the side with recess of the container 10, an external portion of an intake tube 14 extends vertically downwards. Said external portion of the intake tube 14 comprises an upper support part below which an extension 14a engages, through form coupling.

The extension 14a is arranged to be immersed in the water of the aquarium tank. The immersed part has a plurality of horizontal slots 11a which define a fluid inlet 11 of the filter unit 1.

Along the extension of the attachment appendage 15 not affected by the presence of the intake tube 14, an overfall spillway 12a opens which defines a fluid outlet 12 of the filter unit 1.

The upper surface of the attachment appendage 15 defines, below said overfall spillway 12a, a re-entry chute 15a intended to accompany the fall of the now filtered water inside the aquarium tank.

Between the fluid inlet 11 and the fluid outlet 12 identified above two separate filtering paths are defined inside the container 10: a main path 100 and a secondary path 101. The main path also divides into three different subpaths: a fast subpath 100a, a first slow subpath 100b and a second slow subpath 100c.

The pumping means 20 are intended to promote the circulation of the liquid flow along the abovementioned path and subpaths.

More particularly, said pumping means 20 take the shape of a synchronous electric pump which comprises a synchronous electric motor 21, contained inside a box-like body 70 positioned below the horizontal portion 10g of the second side wall 10e to occupy the space defined by the recess in said wall.

The synchronous electric pump comprises also a rotor 22 which turns inside a volute 24 contained on the base of the volute chamber 80 of the container 10. The volute chamber 80 is connected below to the box-like body 70 by means of a connection sleeve 23, which allows a removable engaging of the box-like body 70 on the base of the container 10. Inside the connection hose 23 runs the transmission shaft which connects the rotor 22 to the synchronous electric motor 21.

All the abovementioned paths share a common section 99, which extends from the fluid inlet 11 previously defined as far as an intake 24a of the volute 21. Said common section 99 is defined internally by the extension 14a and by the intake tube 14. The intake tube 14 provides an elbow portion 14c which connects the external portion thereof described previously to a descending portion 14d which flows out at the intake 24a of the volute 24, positioned on the base of the volute chamber 80.

The intake tube 14 is rotatingly mobile so as to be able to move its mouth from the position of alignment with the intake 24a of the volute 24, adjusting in this way the flow rate of the liquid flow which circulates between fluid inlet 11 and outlet 12.

The possibility of regulation of the flow rate facilitates priming of the electric pump, which can be fed with minimum flow rate at the start transient.

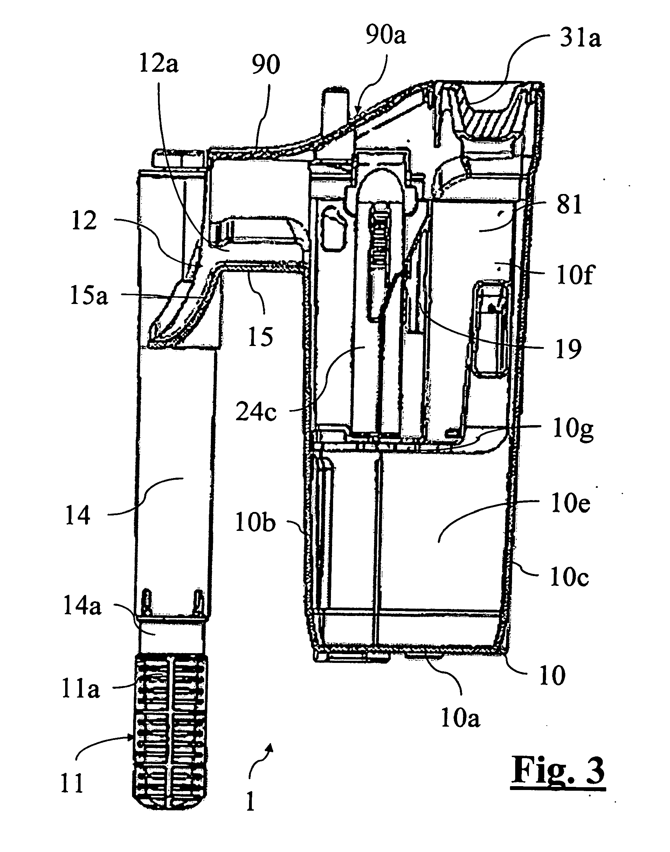

The intake 24a of the volute 24 opens axially in relation to the rotor 22; the volute 24 comprises a main delivery channel 24b and a secondary delivery channel 24c (which can be seen in Figure 3) which depart radially in relation to the rotor 22. The main path 100 follows the main delivery channel 24b, while the secondary path 101 follows the secondary delivery channel 24c.

It should be noted that both the delivery channels 24b and 24c comprise a rising section which follows the radial section, to then open at a higher level in relation to that of the intake 24a; thanks to this technique, complete emptying of the volute 24 is avoided in the case of stopping of the pumping means 20, allowing restarting of the latter without difficulties linked to priming.

The main delivery channel 24a branches off radially towards the rear wall 10c of the container 10, then moves upwards, flanking said wall and leading into the filtering chamber 81 through a hole which opens at mid height of the dividing septum 10f.

Inside the filtering chamber 81 a first cartridge 31, a second cartridge 41 and a third cartridge 51 are inserted which constitute respectively, together with their contents described herein below, a first filter 30, a second filter 40 and a third filter 50. Moreover, as will be clear further on in the description, the main path 100 and its subpaths 100a, 100b, 100c run between said cartridges and in their interior.

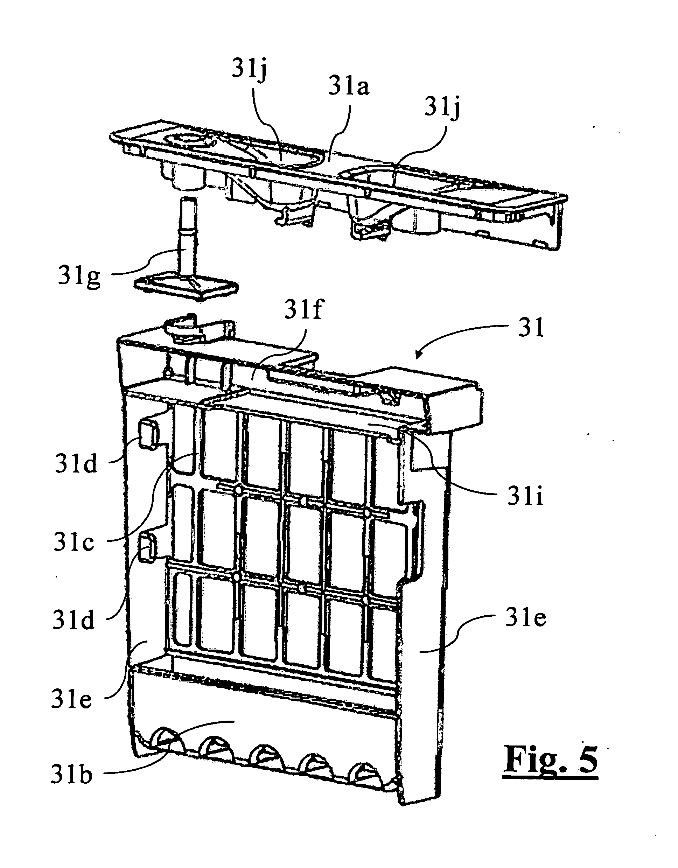

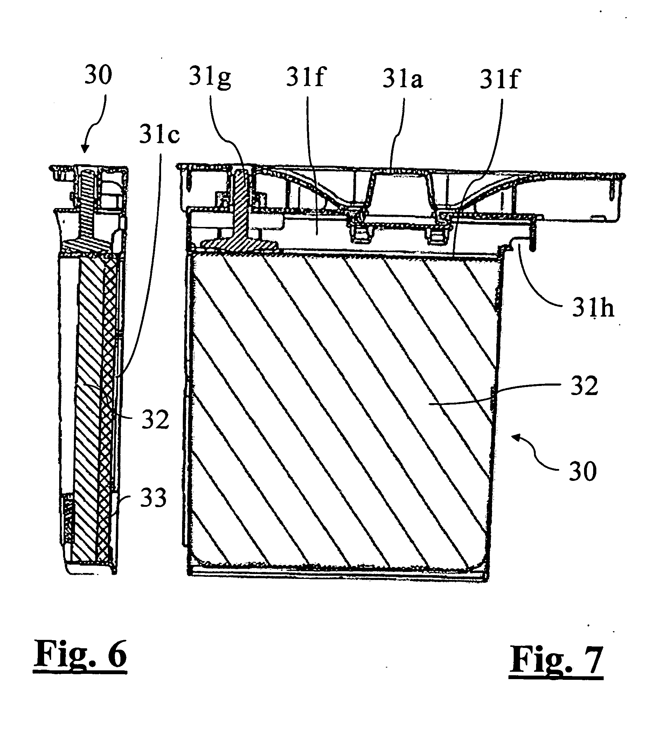

The first cartridge 31, shown in the accompanying Figures 5-7, is arranged to be housed in the rear part of the filtering chamber 81. It comprises a main body, which extends planarly inside the filtering chamber 81, topped by a rear closure cover 31 a, which instead remains outside of the filtering chamber 81, closing it above. Said rear closure cover 31a expands laterally, projecting in relation to the main body, so as to cover also a rear part of the volute chamber 80.

The cover 31 a is associated with hooks for engaging with the main body of the first cartridge 31 and is provided with two grooves 31j intended to facilitate gripping thereof from the outside. By acting on the cover 31a by means of the grooves 31j it is therefore possible to raise the entire first cartridge 31, extracting it vertically from the container 10.

The main body of the first cartridge 31 comprises a support cage intended to maintain in position a first and a second juxtaposed filtering sponge 32, 33.

The filtering sponges 32, 33 are arranged to perform filtering of a mainly mechanical type on the liquid flow which traverses them; more particularly, the first filtering sponge 32, positioned towards the rear wall 10c of the container 10, is arranged to perform a coarser mechanical filtering, the second filtering sponge 33 is instead intended for a finer mechanical filtering.

Four side hooks 31d (whereof only two can be seen in the drawing) are arranged to maintain the filtering sponges 32, 33 against a front grate 31c of the support cage; the support cage is also closed laterally by continuous uprights 31e, only interrupted at the outlet hole of the main delivery channel 24b.

At the base the support cage comprises a cup 31b intended to house the lower end of the two filtering sponges 32, 33. Inside said cup 31b impurities and dirt retained by the sponges are deposited; the presence of the cup prevents their accumulation on the base of the container 10, which is less easy to clean. The cup 31b is provided below with a plurality of drain apertures.

Abutting against the rear wall 10c of the container 10, the support cage therefore defines a first compartment 81a of the filtering chamber 81; a second compartment 81b is instead formed by the portion of filtering chamber beyond the front grate 3 1 c.

Through the outlet hole of the main delivery channel 24b, the liquid flow enters the first compartment 81a upstream of the filtering sponges 32, 33; continuing along the main path 100, said liquid flow must then traverse horizontally said filtering sponges 32, 33 to flow, through the front grate 31c, into the second compartment 81 b.

It should be noted that the first filter 30, which comprises the first cartridge 31 and the filtering sponges 32, 33 contained therein, is arranged to intercept all the liquid flow which follows the main path 100.

Above, the abovementioned support cage is closed by a horizontal septum 31i which delimits below an overflow chamber 31f, which has an outflow hole 31h communicating with the volute chamber 80. The outflow hole 31h is formed at a slightly higher level compared to that of the horizontal septum 31i.

In the case of clogging of the filtering sponges 32, 33 the liquid flow gradually fills the first compartment 81a, until seeping, via the slots which separate the horizontal septum 31i from the rear wall 10c of the container 10, inside the overflow chamber 31f. Here, the liquid rises in level until it reaches the level of the outflow hole 31h, through which it can return into the volute chamber 80.

The filter unit 1 comprises an overflow indicator 31g, formed by a rectangular float from which an indicator rod leads off. The float is contained in the overflow chamber 31f, while the indicator rod is slidingly inserted in a hole which traverses the upper wall of the chamber and the cover 31 a of the first cartridge 31.

When the overflow chamber 31f is empty, the float rests on the horizontal septum 31i. The indicator rod is then completely housed inside the hole which traverses the cover 31a. When the chamber fills with liquid due to a clogging of the filtering sponges 32, 33, the float rises and draws with it the indicator rod, which therefore emerges from the external surface of the cover, indicating visually the condition of malfunctioning of the filter unit 1.

Inside the second compartment 81b of the filtering chamber 81, between the front grate 31 c of the first cartridge 31 and the front wall 10b of the container 10, the second cartridge 41 and, above it, the third cartridge 51 are inserted vertically.

Both the second 41 and third cartridge 51 are arranged to contain filtering material and are provided with rear inlet apertures 41a, 51a (i.e. turned towards the front grate 31c) and front outlet apertures 41b, 51b (i.e. turned towards the front wall 10b) for the liquid flow.

The second cartridge 41 and the filtering material contained therein constitute the second filter 40; the third cartridge 51 and the filtering material contained therein constitute the third filter 50.

The second cartridge 41 and the third cartridge 51 are slightly displaced both from the front grate 31c and from the front wall 10b. Moreover the second cartridge 41 does not extend as far as the base wall 10a of the container 10. Said cartridges are instead in contact with the first side wall 10d on one side and with the dividing septum 10f on the other.

Between the first cartridge 31 and the other two there is therefore a rear interspace 17 wherein the liquid flow exiting from the front grate 31 c channels. Likewise, between the two second 41 and third 51 cartridges and the front wall 10b of the container there is a front interspace 18 which extends upwards as far as the overfall spillway 12a.

The rear interspace 17 and the front one 18 are in fluid communication both via the opposite apertures of the interposed cartridges and via a lower passage 16 formed between the second cartridge 41 and the base wall 10a of the container 10, i.e. defined by the lower portion of second compartment 81 b not occupied by the second cartridge 41.

The liquid flow which follows the main path 100, once it has arrived in the rear interspace 17, then divides along three different subpaths: the fast subpath 100a, which follows the lower passage 16; the first slow subpath 100b, which traverses the second cartridge 41 between the entrance apertures 41a and the exit apertures 41b; and the second slow subpath 100c which traverses the third cartridge 51 between the entrance apertures 51a and the exit apertures 41b. All three subpaths lead into the front interspace 18, wherefrom the liquid flow exits via the overfall spillway 12a.

The slow subpaths are thus named because, when the second 41 and the third cartridge 51 are filled with filtering material, the latter slows down the circulation of the liquid flow through the same cartridges.

The dividing septum 10f has a recirculation aperture 19 which places in communication the second compartment 81b of the filtering chamber 81 with the volute chamber 80. More particularly, said recirculation aperture 19 opens onto the rear interspace 17.

The recirculation aperture 19 allows a partial recirculation of the liquid flow should the flow rate of the filter unit 1, which can be regulated by manipulation of the intake tube 14, not be maximum.

In the embodiment illustrated, the second cartridge 41 contains an adsorbent filtering material 42: carbon or another suitable material which offers an extensive surface area for the adsorption of the impurities of the liquid flow.

The third cartridge 51 contains instead a biological filtering material 52: ceramic tubes or another suitable material for hosting bacterial colonies with purification capacities.

The second cartridge 41 is shaped like a basket, open above. On the rear side, which faces onto the front grate 31c of the first filter 31, the entrance apertures 41a, rectangular in shape, open on two superimposed rows. Eight entrance apertures 41a are present on each row. The exit apertures 41b, ten in number, are instead formed on a single row on the opposite side of the basket. It should be noted that the number of apertures may vary according to the dimensions of the filter unit; more particularly for smaller filter units compared to the one according to the present embodiment the apertures will be in a smaller number (for example two rows with six entrance apertures and one row of eight for the exit apertures). They extend as far as the base of the basket and also have a substantially rectangular shape, with rounded upper end. Each exit aperture 41 b is divided in half by a reinforcement ribbing 41c which runs vertically along the entire extension of the basket.

The total area of the exit apertures 41b is smaller than the total area of the entrance apertures 41a to ensure the water stays for a long length of time inside the cartridge.

From the rear side of the basket rises a sleeve 41 d, which also acts as a hooking member between the second 41 and the third cartridge 51. It has in fact at its end a hooking hole 41e arranged to house a tooth 51e of the third cartridge 51.

The third cartridge 51 is also shaped like a basket open above. Said third cartridge 51 is superimposed over the second 41, closing it above with its base.

While the rear side of the third cartridge 51 is flat, the front one has a balcony portion 51d projecting in relation to the base of the cartridge. Said balcony portion 51d extends inside a space defined internally by the attachment appendage 15 of the filter unit.

At the base of the rear side of the third cartridge 51 two series of four (other embodiments contemplated provide for series of three) vertical notches up which constitute the entrance apertures 51a. The exit apertures 51b open instead on the lower end of the balcony portion 51d, in the vicinity of the overfall spillway 12a.

Finally, the third cartridge 51 has secondary apertures 51c positioned on the front side of the basket yet below the balcony portion 51d. Said secondary apertures 51d, which have a total area greater both than the entrance apertures 51a and the exit apertures 51b of the third cartridge 51, have as primary function that of promoting complete flooding of the biological filtering material 52 contained in cartridge 51.

The third cartridge 51 is closed above by a percolator cover 60.

Said percolator cover 60 is locked on the third cartridge by means of rear feet 60a and of a front snap joint 60b, which co-operate with respective seats of the third cartridge 51. In order to lock the percolator cover 60 on the third cartridge 51, an operator must first insert the rear feet 60a in their respective seats then, by hinging on said rear feet 60a, rotate the percolator cover until the snap joint 60b is locked in its seat. Contrarily, the removal of the percolator cover 60 first provides for the disengaging of the snap joint 60b and then the extraction of the rear feet 60a.

The percolator cover 60 has a central depression 60c intended to hold a third filtering sponge 61 mainly intended for the mechanical filtering of the liquid flow.

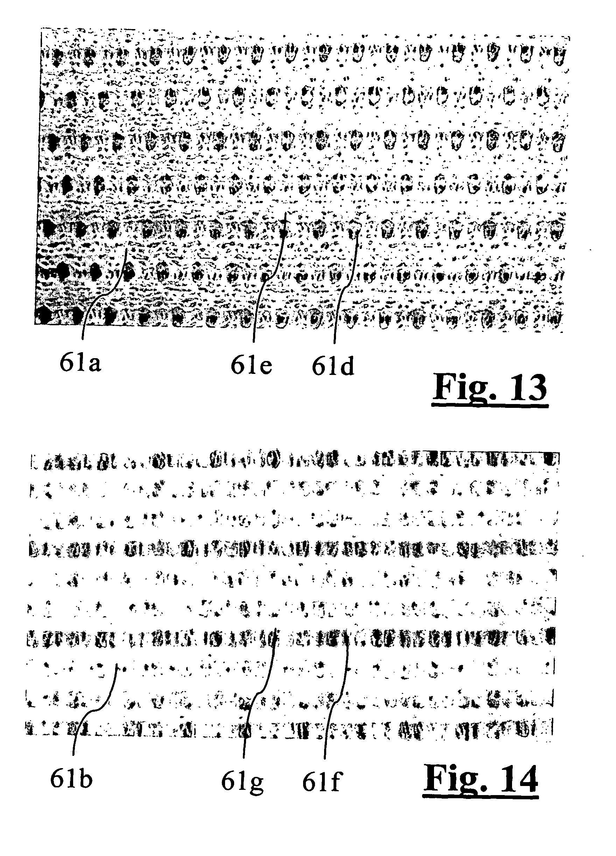

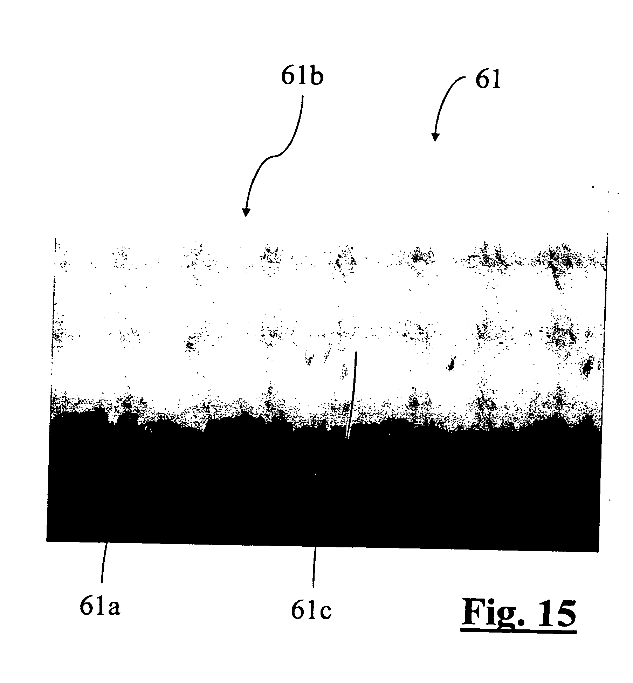

Said third filtering sponge 61, which can be seen in the photos which make up Figures 13-15, comprises two fabrics, an upstream fabric 61a and a downstream fabric 61b, which enclose between them a sponge body 61c.

The upstream fabric 61a and the downstream fabric 61b have a different pattern; the sponge body 61c placed between them is formed by threads orthogonal to said fabrics.

The upstream fabric 61a has circular holes 61d with diameter of approximately 1 mm (surface = 0.79 mm²); the circular holes are arranged along rows distanced one from the other by a wide band of close weave fabric 61e.

The downstream fabric 61 b has instead rectangular holes 61f of smaller size (approximately 0.52 x 0.60 mm for a surface of 0.31 mm²). These holes are also arranged in rows distanced by short close weave bands 61g.

The third sponge 61, which has a thickness of approximately 3 mm, is inserted on the percolator 60 in such a way that the downstream fabric is turned towards the base of the central depression 60c.

Thanks to its structural peculiarity, the third sponge 61 works by performing mechanical filtering along the whole of its thickness: in fact the upstream fabric 61a retains the coarse detritus, the downstream fabric 61b the fine type.

The percolator cover 60 is traversed by a plurality of appropriately calibrated percolation holes 60d which open on the base of the aforesaid central depression 60c.

Moreover the percolator cover 60 is equipped with a handle 60e and projecting in relation to the central depression 60c. Said handle 60e traverses the third filtering sponge 61 and can be gripped by an operator who, by virtue of the rigid coupling formed by the rear feet 60a and by the snap joint 60b described previously, is able to extract, by acting on it, the entire third cartridge 51-percolator cover 60 block.

The secondary path 101 previously introduced traverses a fourth filter 65 defined by said percolator cover 60 and by the third filtering sponge 61 positioned above it.

The secondary path 101 follows in fact the secondary delivery channel 24c of the volute 24, which positions at the dividing septum 11c and rises up along the latter to then flow out above the percolator cover 60. The liquid flow which follows the secondary path 101 then traverses the third filtering sponge 61 to then percolate through the percolation holes 60d inside of the third cartridge 51. Finally the liquid flow flows out from the exit apertures 51b of the cartridge and from the overfall spillway 12a, then returning into the aquarium tank.

Via the percolation stage, the liquid flow which follows the secondary path 101 enriches with the oxygen necessary for a correct oxidation of the ammonia contained therein.

The filter unit 1 also provides a front closure cover 90 which covers the portion of container 10 left free by the rear closure cover 31a. Said front closure cover 90 has an upper shaped surface 90a, acting as a drainer to return to the aquarium tank the water which may possibly flow out from the container 10.

Obviously a person skilled in the art may make numerous modifications and changes to the filter units described above with the aim of meeting contingent and specific needs, all however contained within the sphere of protection of the invention as defined by the following claims.

## Claims

1. Filter unit for aquariums (1), comprising: a container (10), provided with a fluid inlet (11) and a fluid outlet (12) to allow the fluid communication thereof with an aquarium tank; pumping means (20) intended for circulation of a liquid flow inside said container (10) between said fluid inlet (11) and said fluid outlet (12) along at least one main path (100); a first filter (30), arranged to intercept all the liquid flow which follows said main path (100) performing on it at least one mechanical filtering action; at least one second filter (40) arranged to perform at least one filtering action other than the mechanical one; said main path (100) being divided into at least one first slow subpath (100b) and a fast subpath (100a), said second filter (40) being arranged to intercept, by slowing it down, only the part of the liquid flow which follows the first slow subpath (100b), the part of liquid flow which follows the fast subpath (100a) bypassing said second filter (40) without being slowed down by it; **characterised in that** between said fluid inlet (11) and said fluid outlet (12) a secondary path (101) is defined for the liquid flow, which traverses a fourth filter (65) comprising a percolator.

2. Filter unit (1) according to claim 1, wherein said second filter (40) comprises a second cartridge (41) arranged to contain filtering material; said second cartridge (41) comprising at least one access aperture (41a) and at least one exit aperture (41b), said first slow subpath (100b) traversing said second cartridge (41).

3. Filter unit (1) according to claim 2, wherein said second cartridge (41) is inserted extractably inside a second compartment (81) of the container (10), the liquid flow which follows the fast subpath (100a) circulating inside the volume of the second compartment (81) not occupied by said second cartridge (41).

4. Filter unit (1) according to claim 3, wherein said fast subpath (100a) follows a lower passage (16) defined above by the second cartridge (41) and below by a base wall (10a) which delimits the second compartment (81) below.

5. Filter unit (1) according to one of claims 3 or 4, wherein the access apertures (41a) of the second cartridge (41) are a plurality and open on one side of said second cartridge (41), the exit apertures (41b) also being a plurality and opening on an opposite side of said second cartridge (41).

6. Filter unit (1) according to claim 5, wherein the overall area of said access apertures (41a) is greater than the overall area of said exit apertures (41b).

7. Filter unit (1) according to one of claims 3 or 4, comprising a third filter (50) arranged to perform at least one filtering action other than the mechanical one, said third filter (50) comprising a third cartridge (51), equipped with at least one access aperture (51a) and at least one exit aperture (51b), arranged to contain filtering material, said third cartridge (51) being inserted extractably inside the second compartment (81) superimposed on the second cartridge (41).

8. Filter unit (1) according to claim 7, wherein said percolator is formed by a percolator cover (60) above which is positioned a third filtering sponge (61), said percolator cover (60) closing said third cartridge (51) above.

## Patentansprüche

1. Filtereinheit für Aquarien (1), umfassend: einen Container (10), versehen mit einem Fluideingang (11) und einem Fluidausgang (12), um so eine Fluidverbindung mit einem Aquarientank zu ermöglichen; einem Mittel zum Pumpen (20) bestimmt für eine Zirkulation einer Flüssigkeitsströmung innerhalb des Containers (10) zwischen dem Fluideingang (11) und dem Fluidausgang (12) entlang zumindest eines Hauptpfades (100); einem ersten Filter (30), dazu angeordnet, in jede Flüssigkeitsströmung, welche dem Hauptpfad (100) folgt, einzugreifen und um zumindest einen mechanischen Filtervorgang an ihm vorzunehmen; zumindest einen zweiten Filter (40), dazu angeordnet, zumindest einen Filtervorgang, welcher ein anderer als der mechanische ist, durchzuführen; wobei der Hauptpfad (100) in zumindest einen ersten langsamen Teilpfad (100b) und einen schnellen Teilpfad (100a) unterteilt ist, wobei der zweite Filter (40) dazu angeordnet ist, nur in den Teil der Flüssigkeitsströmung, welche dem ersten langsamen Teilpfad (100b) folgt, durch ein Verlangsamen, einzugreifen, wobei der Teil der Flüssigkeitsströmung, der dem schnellen Teilpfad (100a) folgt, den zweiten Filter (40) überbrückt, ohne dadurch verlangsamt zu werden; **dadurch gekennzeichnet, dass** zwischen dem Fluideingang (11) und dem Fluidausgang (12) ein zweiter Pfad (101) für die Flüssigkeitsströmung definiert ist, welche einen vierten Filter (65), der einen Perkolator umfasst, durchläuft.

2. Filtereinheit (2) gemäß dem Anspruch 1, wobei der zweite Filter (40) eine zweite Patrone (41) umfasst, dazu angeordnet, Filtermaterial zu beinhalten; die zweite Patrone (41) umfassend zumindest eine Zugangsöffnung (41a) und zumindest eine Ausgangsöffnung (41b), wobei der erste langsame Teilpfad (100b) die zweite Patrone (41) durchläuft.

3. Filtereinheit (1) gemäß dem Anspruch 2, wobei die zweite Patrone (41) in ein zweites Kompartment (81) des Containers (10) extrahierbar eingefügt ist, wobei die Flüssigkeitsströmung, welche dem schnellen Teilpfad (100a) folgt, in dem Volumen des zweiten Kompartments (81) zirkuliert, welches nicht von der zweiten Patrone (41) betroffen ist.

4. Filtereinheit (1) gemäß dem Anspruch 3, wobei der schnelle Teilpfad (100a) einer niedrigeren Passage (16) folgt, welche nach oben durch die zweite Patrone (41) und nach unten durch eine Basiswand (10a), welche das zweite Kompartment (81) nach unten begrenzt, definiert ist.

5. Filtereinheit (1) gemäß einem der Ansprüche 3 oder 4, wobei die Zugangsöffnung (41a) der zweiten Patrone (41) in einer Vielzahl vorkommt und auf einer Seite der zweiten Patrone (41) offen sind, wobei die Ausgangsöffnungen (41b) ebenso in einer Vielzahl vorkommen und sich an einer gegenüberliegenden Seite der zweiten Patrone (41) öffnen.

6. Filtereinheit (1) nach Anspruch 5, wobei die Gesamtfläche der Zugangsöffnungen (41a) größer als die Gesamtfläche der Ausgangsöffnungen (41b) ist.

7. Filtereinheit nach einem der Ansprüche 3 oder 4, umfassend einen dritten Filter (50), angeordnet, um zumindest einen Filtervorgang, der ein anderer als ein mechanischer ist, durchzuführen, wobei der dritte Filter (50) eine dritte Patrone (51) umfasst, welche mit zumindest einer Zugangsöffnung (51a) und zumindest einer Ausgangsöffnung (51b) ausgestattet ist, wobei diese dazu angeordnet ist, ein Filtermaterial zu enthalten und die dritte Patrone (51) extrahierbar in das zweite Kompartment (81), die zweite Patrone (41) überlagernd, eingefügt ist.

8. Filtereinheit (1) nach Anspruch 7, wobei der Perkolator durch eine Perkolatorabdeckung (60) gebildet ist, über welcher ein dritter Filterachwamm (61) positioniert ist, wobei die Perkolatorabdeckung (60) die dritte Patrone (51) nach oben hin abschließt.

## Revendications

1. Dispositif de filtration pour aquarium (1), comprenant: un récipient (10), pourvu d'une entrée de fluide (11) et d'une sortie de fluide (12) pour permettre l'échange de fluide avec une cuve d'aquarium; des moyens de pompage (20) destinés à faire circuler un flux de liquide à l'intérieur dudit récipient (10) entre ladite entrée de fluide (11) et ladite sortie de fluide (12) le long d'au moins un trajet principal (100); un premier filtre (30), agencé pour interagir avec l'ensemble du flux de liquide qui suit ledit trajet principal (100) en effectuant sur ce dernier au moins une action de filtrage mécanique; au moins un deuxième filtre (40) agencé pour effectuer au moins une action de filtrage autre que l'action mécanique; ledit trajet principal (100) étant divisé en au moins un premier sous-trajet lent (100b) et un sous-trajet rapide (100a), ledit deuxième filtre (40) étant agencé pour interagir, en la ralentissant, avec seulement la partie du flux de liquide qui suit le premier sous-trajet lent (100b), la partie du flux de liquide qui suit le sous-trajet rapide (100a) contournant ledit second filtre (40) sans être ralentie par ce dernier; **caractérisé en ce qu'**entre ladite entrée de fluide (11) et ladite sortie de fluide (12), un trajet secondaire (101) est défini pour le flux de liquide, qui traverse un quatrième filtre (65) comprenant un percolateur.

2. Dispositif de filtration (1) selon la revendication 1, dans lequel ledit second filtre (40) comprend une seconde cartouche (41) agencée pour contenir un matériau filtrant; ladite seconde cartouche (41) comprenant au moins une ouverture d'entrée (41a) et au moins une ouverture de sortie (41b), ledit premier sous-trajet lent (100b) traversant ladite seconde cartouche (41).

3. Dispositif de filtration (1) selon la revendication 2, dans lequel ladite seconde cartouche (41) est insérée, de manière à pouvoir être extraite, dans un second compartiment (81) du récipient (10), le flux de liquide qui suit le sous-trajet rapide (100a) circulant à l'intérieur du volume du deuxième compartiment (81) non occupé par ladite seconde cartouche (41).

4. Dispositif de filtration (1) selon la revendication 3, dans lequel ledit sous-trajet rapide (100a) suit un passage inférieur (16) défini au-dessus par la seconde cartouche (41) et en dessous par une paroi de base (10a) qui délimite le dessous du second compartiment (81).

5. Dispositif de filtration (1) selon l'une des revendications 3 ou 4, dans lequel les ouvertures d'entrées (41a) de la seconde cartouche (41) forment une pluralité d'ouvertures et débouchent sur un côté de ladite seconde cartouche (41), les ouvertures de sorties (41b) formant également une pluralité d'ouvertures et débouchant sur un côté opposé de ladite seconde cartouche (41).

6. Dispositif de filtration (1) selon la revendication 5, dans lequel la surface totale des ouvertures d'entrées (41a) est plus grande que la surface totale des ouvertures de sorties (41b).

7. Dispositif de filtration (1) selon l'une des revendications 3 ou 4, comprenant un troisième filtre (50) agencé pour effectuer au moins une action de filtrage autre que l'action mécanique, ledit troisième filtre (50) comprenant une troisième cartouche (51), équipée d'au moins une ouverture d'entrée (51a) et d'au moins une ouverture de sortie (51b), agencée pour contenir un matériau filtrant, ladite troisième cartouche (51) étant insérée de manière à pouvoir être extraite à l'intérieur du second compartiment (81), de manière à être superposée à la seconde cartouche (41).

8. Dispositif de filtration (1) selon la revendication 7, dans lequel ledit percolateur est formé par un couvercle percolateur (60) au dessus duquel est positionnée une troisième éponge de filtrage (61), ledit couvercle percolateur (60) fermant par le dessus ladite troisième cartouche (51).
